(19) Europäisches Patentamt
European Patent Office
Office européen des brevets

(11) EP 2 700 905 A1

(12) EUROPEAN PATENT APPLICATION

(43) Date of publication:
26.02.2014 Bulletin 2014/09

(51) Int Cl.:
G01C 21/20 (2006.01)     G01C 25/00 (2006.01)

(21) Application number: 12181496.6

(22) Date of filing: 23.08.2012

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicant: Sony Mobile Communications AB
221 88 Lund (SE)

(72) Inventors:
• Klinghult, Gunnar
223 59 Lund (SE)

• Nyström, Martin
282 94 Hörja (SE)
• Helgstrand, Magnus
221 88 Lund (SE)

(74) Representative: Aurell, Henrik
Zacco Sweden AB
P.O. Box 4289
203 14 Malmö (SE)

(54) Method and system for alignment of sensors in a similar environment

(57) A method and system for alignment of sensor units comprised in at least two independent communication devices operating in the same environment, the method may comprise the steps of receiving a first signal representing sensor data collected by a first sensor unit comprised in a first communication device, receiving a second signal representing sensor data collected by a second sensor unit comprised in a second communication device, calculating a correlation function between the first signal and the second signal, defining the time difference between first and second signals by finding a maximum in the correlation function while time shifting the first and the second signals and calibrate the first and second sensor units to compensate for the defined time difference.

Fig 2

**Description**

TECHNICAL FIELD

The present invention relates in general to a method for alignment of sensors comprised in communication devices in similar environment, due to signal latency/delay and relative movement of the devices. The invention also relates to a system that comprises at least two sensors comprised in communication devices within a similar environment.

BACKGROUND

A communication device configured to be used in a wireless communication network may often include at least one sensor and a processor communicatively coupled to the sensor.

As inexpensive and small sensors, such as accelerometers, gyros and magnetometers, are widely available, they are incorporated into many modern communication devices, such as mobile phones and mobile phone accessories. The sensors may be used to determine the orientation of the device, in relation to earth, for portrait/landscape display switching, map alignment, pedometry, navigation etc.

While good orientation accuracy is important for most applications, achieving high accuracy with low cost sensors is also challenging. This is where sensor calibration often helps. Usually this process is lengthy and generally involves complicated steps for the user and is time consuming.

Some mobile devices are being calibrated in factory in specific fixtures, others by the users placing the device in the specific orientations, while other devices undergo continuous or occasional "on the fly" calibration during normal orientation.

Since mobile phones and the accessories typically uses inexpensive sensors and as a result the calibration is likely to drift in time. It would therefore be desirable to provide techniques that can compensate for this drift in time of the sensors continuously and with little if any user input.

SUMMARY OF THE INVENTION

With the above description in mind, then, an aspect of the present invention is to provide a way to improve alignment of sensors within similar environments, which seeks to mitigate, alleviate or eliminate one or more of the above-identified deficiencies in the art and disadvantages singly or in any combination.

As will be described in more details by the aspects of the invention below, one way to improve the alignment of the sensors is to continuously determine the time difference between sensor data from sensors and the relative orientations between the sensors in similar environment.

An aspect of the present invention relates to a method for alignment of sensor units comprised in at least two independent communication devices operating in the same environment, said method comprising the steps of receiving a first signal representing sensor data collected by a first sensor unit comprised in a first communication device, receiving a second signal representing sensor data collected by a second sensor unit comprised in a second communication device, calculating a correlation function between said first signal and said second signal, defining the time difference between first and second signals by finding a maximum in said correlation function while time shifting the first and the second signals and calibrate the first and second sensor units to compensate for the defined time difference.

The method may further comprises the steps of finding a first movement, based on the correlation function, and defining a first reference axis in the reference co-ordinate system in each device as the direction of the first found movement, finding a second movement, based on the correlation, which are different from the first found movement, for defining a second reference axis in the reference co-ordinate system in each device as the direction of the second found movement and determining the relative rotation between the at least two devices by combining the defined first and second reference axis within the reference co-ordinate system of each devices.

The method may further comprises the steps of repeatedly finding movements correlated between the at least two sensor units, repeatedly combining the found movement with the previously found movement between the at least two sensor units for increasing accuracy in the defined time delay and in the determined relative orientation. The second reference axis may be determined as a projection of the second movement perpendicular to the first reference axis.

The movement may be a linear acceleration or a rotational acceleration.

The direction of the first reference axis may be along the linear acceleration, opposite the linear acceleration, along a clockwise rotation axis of the rotational acceleration or along a counterclockwise rotation axis of the rotational acceleration.

The second reference axis may be the reference rotation in a plane perpendicular towards the first reference axis.

The step of defining a time delay may further comprising determining a first reception time of the first signal, determining a second reception time of the second signal and defining the time delay as the difference between the first and the second reception time.

The sensor units may be any of accelerometer, gyro, magnetometer or environmental sensor.

Another aspect of the present invention relates to a system alignment of sensor units comprised in at least two independent communication devices operating in the same environment, said system further comprises a unit for receiving and processing receiving a first signal representing sensor data collected by a first sensor unit comprised in a first communication device and receiving a second signal representing sensor data collected by a second sensor unit comprised in a second communication device, means for calculating a correlation function between said first signal and said second signal, means for defining the time delay between first and second signals by finding a maximum in said correlation function while time shifting the first and the second signals and means for calibrating the first and second sensor units to compensate for said time difference.

The system may further comprise means for finding a first movement, based on the correlation function, and defining a first reference axis in the reference co-ordinate system in each device as the direction of the first found movement means for finding a second movement, based on the correlation, which are different from the first found movement, for defining a second reference axis in the reference co-ordinate system in each device as the direction of the second found movement and means for determining the relative rotation between the at least two devices by combining the defined first and second reference axis within the reference co-ordinate system of each devices.

The unit for receiving and processing sensor data may be comprised in one of the at least two independent communication units.

The sensor units may be any of accelerometer, gyro, magnetometer or environmental sensor.

One of the at least two independent communication units may be a mobile phone.

The features of the above-mentioned aspects may be combined in any way possible to form variants of the embodiments of the present invention.

BRIEF DESCRIPTION OF THE DRAWINGS

Further objects, features and advantages of the present invention will appear from the following detailed description of the invention, wherein embodiments of the invention will be described in more detail with reference to the accompanying drawings, in which:

FIG. 1 shows a system according to the present invention.

FIG. 2 shows an embodiment of the present invention with a setup of communications devices comprising sensors.

FIG. 3 shows two artificial series of collected sensor data, from the set up according to figure 2.

FIG. 4 shows the time shifted correlation function of the collected sensor data according to figure 3.

DETAILED DESCRIPTION

Embodiments of the present invention relate, in general, to the field of electronic communication devices. A preferred embodiment relates to a portable communication device, such as a mobile phone, including one or more accessories, e.g. a headset, microphone, camera, arm wrist sensor etc. However, for the sake of clarity and simplicity, most embodiments outlined in this specification are related to a mobile phone.

Embodiments of the present invention will be described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like reference signs refer to like elements throughout.

The present disclosure is directed to a method and system that uses signals recorded by different sensors to improve the possibility to align signals received within a mobile communication system, where some of the sensors are located on different devices, by using correlation techniques. For example, one device may be a mobile phone and the other device may be a wireless/wired devices that communicates with the mobile phone, such as a headset.

Sensor data from accessories may be sent to the mobile phone for processing in the phone over serial links, such as Bluetooth and/or USB. Sensor data from an accessory are usually combined with sensor data from other accessories or the mobile phone to get additional information. By the nature of the serial communication between the mobile phone and the accessory, there will be an undetermined time delay, latency, between the different data sets, this delay often needs to be determined and accounted for.

According to one aspect of the invention it may be useful to know the relative orientation between the sensors, i.e. a sensor included in a headset and a sensor included in the mobile phone to be able to determine in what direction the wearer is looking.

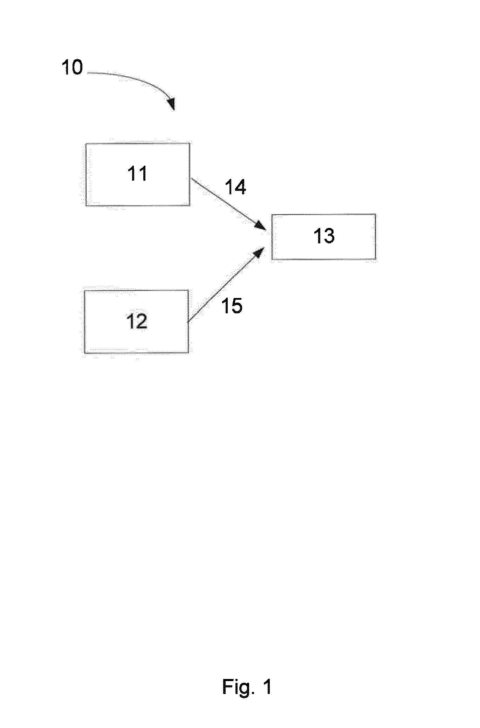

In an exemplary embodiment of the invention, as shown in fig. 1, a system, 10, includes at least two mobile communication devices 11, 12, for example a mobile phone and a headset, and a signal processing unit, a CPU, 13.

The devices 11, 12 are equipped with at least one motion sensor unit, not shown, and preferably the same kind of sensors. The sensor units may include accelerometers or other motion sensing devices, such as gyros and magnetometers, or any environmental sensor e.g. 50/60-Hz signal from surrounding electricity, light sensors, etc. for monitoring the activity or movement of the devices 11, 12. A first sensor unit, may be located in a mobile phone, and a second sensor unit, may be located in a headset.

The signal processing unit 13, is configured to receive and process sensor data signals 14, 15 collected from each of the sensor units within the system, 10. The signal processing unit 13 may be located in one of the communication devices.

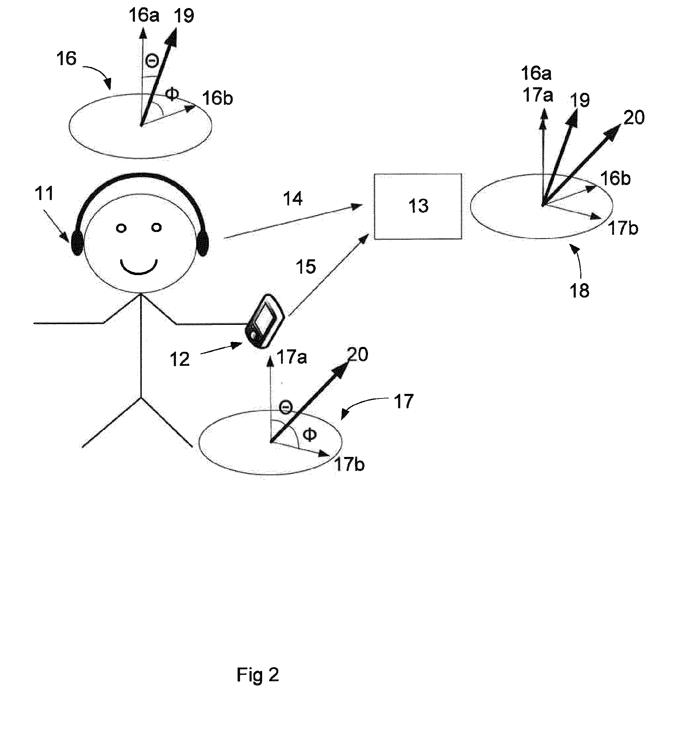

In the system, as shown in fig. 2, sensor data signals 14, 15 from the sensor unit may be transferred over i.e. Bluetooth to the signal processing unit 13 in which the sensor data received from the sensor unit in the first device, i.e. headset, is combined with sensor data from the sensor unit in the second device, i.e. mobile phone. It is anticipated that other protocols may be used over the wireless link.

Sensor data may be an electrical signal representing i.e. the sound output signal from a microphone, a light output signal from a camera or a movement signal from a movement sensor, i.e. an accelerometer.

Sensor data from the sensor units will experience time delays due to e.g. the nature of the serial connection and will vary over time due to circumstances such as Bluetooth traffic intensity. A delay compensation block is required before the at least two sensor data signals, 14, 15 can be processed.

If the first sensor unit and the second sensor unit are located in similar environments, i.e. if the sensor output of the first sensor unit and the second sensor unit are similar, but not necessarily identical, the similarity of the sensor data may be used to calculate the time delay, $\Delta T$, between reception time, $\Delta t_1$, of the sensor data from the first sensor unit and reception time, $\Delta t_2$, of the sensor data from the second sensor unit. One example of similar environment is when the user wearing a mobile phone and a headset is travelling by car, bus or other transportation vehicles. The time delay, $\Delta T$, will be calculated according to formula 1.

$$\Delta T = \Delta t_2 - \Delta t_1$$

Formula 1

$\Delta T$ can be determined in a processing unit, CPU, by continuously evaluating and finding the maximum for the normalized time shifted correlation functions between the signals, sensor data, from the first sensor unit and the second sensor unit, according to formula 2.

$$(f_1 * f_2)[\Delta T] = \frac{1}{n-1} \sum_{m=0}^{n} \frac{\left(f_1^*[m] - \overline{f_1}\right)\left(f_2[\Delta T + m] - \overline{f_2}\right)}{\sigma_{f_1}\sigma_{f_2}}$$

Formula 2

In which $f_1$ is the function of the sensor data of the first sensor unit and $f_2$ is the function of sensor data of the second sensor unit, n is the number of points in the data series, $\overline{f_1}$ and $\overline{f_2}$ are the mean values of the sensor data from the first and second sensor unit, respectively, $\sigma_{f_1}$ and $\sigma_{f_2}$ are the standard deviations of the sensor data from the first and second sensor unit, respectively.

If the sensor data is multidimensional, the dimensionality could for example be decreased to one by using the magnitude of the sensor data. This may be used when calculating the delay, $\Delta T$, in which case it is not necessary to compare more than one dimension.

By continuously calculating the delay, $\Delta T$, sensor data can at any time be combined in an ideal way and time delays be accounted for.

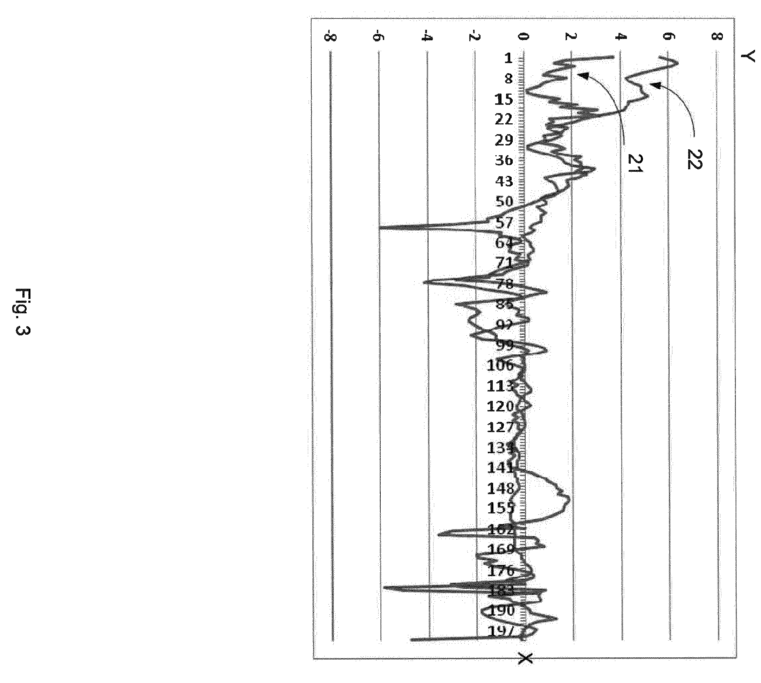

In a first example, sensor data 14 from an movement sensor in a headset 11 and sensor data 15 from a movement sensor in a mobile phone 12, as shown in FIG 2, are used. The sensor data could look something like the two artificial series 21, 22 of accelerometer sensor data, as shown in FIG 3, where sensor data graph 21 may be a sensor data signal from the mobile phone 12 and sensor data graph 22 may be a sensor data signal from the headset 11.

The units on the y-axis show the arbitrary units and the unit on the x-axis shows the number of samples. Both accelerometers have the same sample rate in this example.

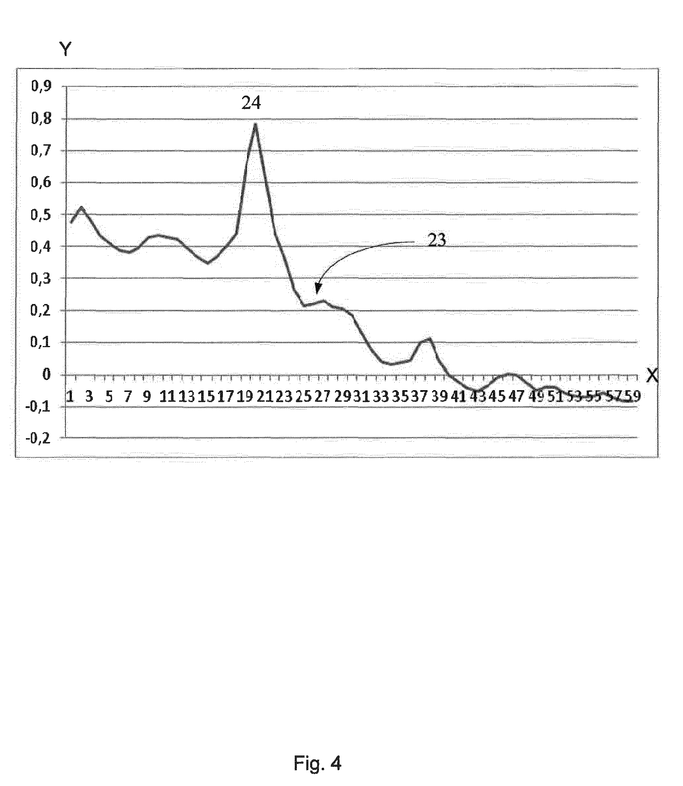

The time shifted correlation function of sensor data 23 received from the first and second sensor units as a function of $\Delta T$ is shown in FIG 4. A distinct maximum 24 is found, which gives $\Delta T$.

Once the latency or delay alignment has been done, the above described method can also be utilized to align the magnitude of a low accuracy sensor to an accurate sensor by calculating a scaling factor between the readings of the two sensor units. An example would be a cheap accelerometer in a headset that could be calibrated towards a more accurate accelerometer in a mobile phone

When the system has been aligned due to the latency/delay, $\Delta T$, the relative movement, rotation or linear, between the devices within the system may be determined. This may be useful when the at least two devices moves related to each other.

In one embodiment a two dimensional relative orientation between at least two sensor units, comprised in the communication devices, may be determined. Two consecutive, non-parallel movements 19, 20, same movement each time in both system, are needed. The first movement could be a common rotation, or a common translation, and the second movement could be a common rotation or a common translation.

Prerequisite for the determination of the relative orientation is that the sensor data has been aligned, as disclosed above, and that the sensors are in a similar environments, i.e. the sensor readings are similar but not necessarily identical.

In one embodiment may a similar environment be the surrounding static gravitation, i.e. the earth gravitation. It may be possible to determine the angles of the movement, $\Theta$ and $\Phi$, and the direction of the static acceleration 19, 20 of a device relative the static gravitation. The relative orientation between the at least two devices is however not possible to be determined based only on the static gravitation.

In one embodiment may a similar environment be any environmental sensor e.g. 50- or 60-Hz signal from surrounding electricity, light sensors, etc. The 50- or 60-Hz signal is a 3 dimensional electromagnetic vector, radiated by surrounding electric wires and surrounding equipment. The vectors from electric radiation may have different direction in the two measurement points for the devices, thus this vectors may only be used for alignment in time. For alignment time we the measured electromagnetic 50-or 60-Hz signal in the two measurement spots for the devices has to belong to radiation from the same phase. There are normally 3-phase electric systems and there is often multiple overlaid fields, delayed 120 degrees apart. Determining if the measured electromagnetic 50- or 60-Hz belong to radiation from the same phase may be done by correlation of disturbances, i.e. if there is a Dirac by some current change, or a specific harmonic pattern well correlated in the two measurements, then it may be concluded that they origin from the same phase, and then the measurements can be used for alignment in time between the at least two devices.

To be able to determine the relative orientation between at least two devices, i.e. the relative orientation between the reference co-ordinate systems of the first sensor unit and the second sensor unit, a movement of the devices or a perturbation of the sensor readings i.e. acceleration, is needed. The perturbation of the sensor readings for each sensor units should ideally be identical, but using statistical methods it is only necessary that the perturbations are similar over time, as long as the perturbation timescale is much faster than the timescale of the change in orientation of the sensor units relative each other.

A real life example with a near ideal conditions would be a headset and a mobile phone with accelerometers on a table in a boat during a storm. The relative orientation of the headset and the mobile phone is constant and the acceleration perturbation is large due to the rocking of the boat.

A more realistic, but still feasible, situation would be a headset worn by a person with the mobile phone in the pocket of a user, who is walking.

A stepwise process regarding how to define relative orientation between two devices is disclosed below and sensors for determination of linear movement and/or rotational movement in each device are used in this process.

In the first step, the first found linear or rotational movement that is enough correlated between the two devices 11, 12 is used to determine a first reference axis 16a, 17a within a reference co-ordinate system 16, 17, one in each device 11, 12. If the movement is linear, the reference axis is directed in the direction of the linear movement. If the movement is a rotation, the reference axis is the rotation axis. Enough correlated is defined by a predetermined value, which is determined dependent of which application the alignment is used for. The value is also dependent on the availability of sensor data and what demands are sat on the precision of the definition of the relative orientation.

The first reference axis 16a, 17a is determined as an axis in the direction of the first found enough correlated movements within each devices 11, 12. The first reference axis are parallel to each other. One dimension is now defined in the reference co-ordinate system 16, 17 within each device 11, 12. The first determined reference axis may be stored in an internal memory within each device.

In the second step, a second linear or rotational movement is found. The second found movement should be enough correlated between the two devices, but not parallel to the first found movement. This found second movement is used to determine the second reference axis 16b, 17b within each reference co-ordinate systems 16, 17. The second reference axis is determined as an axis in the direction of the second found movement in a plane that may be perpendicular towards the direction of the first reference axis.

The relative orientation between the two devices is determined by combining the reference co-ordinate systems of each device, 18.

The first and second step may be repeated continuously by finding linear or rotational movements that are enough correlated in each system. The found movements may then be used to recalculate the latest determined at least first and second reference axis.

Consecutively, the found linear or rotational movement that is enough correlated between the at least two devices are used to fine tune the previously determined relative orientation between the at least two devices 11, 12, and to compensate for deviations in the calculation of reference axis 16a, 16b, 17a, 17b. This increases the precision of the system. It may also be possible to pre-set when and how often this recalculation step may be performed.

As an alternative embodiment, the following method may be used to defining the relative orientation between two devices in a system described above.

In the first step, two angles, $\Theta$ and $\Phi$, are defined which are used for transforming the reference co-ordinate system 16 of the first sensor unit, into the reference co-ordinate system 17 of the second sensor unit, as shown in FIG 2.

In the second step, sensor data 14, 15 from both sensor units are collected and sampled during perturbation of the acceleration.

In the third step, the collected sensor data is aligned by using the time delay.

In the forth step, the environment is investigated. If the correlation degree of the collected sensor data set is high, the devices experience similar environment and the sensor data can be used. If there is no correlated sensor data it is an indication that the devices do not experience similar environments.

In the fifth step a 2D correlation function is set up a to sample the rotational space spanned by the two angles, $\Theta$ and $\Phi$.

In the sixth step the correlation is maximized for finding the two angles, $\Theta$ and $\Phi$.

The above described methods may be used for more than two devices.

In one embodiment, e.g. a gamming environment, the system may include a network of wearable sensors attached, for example, to a user's arms and/or legs. The method and system according to the invention may allow the user's to interact with the game.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms used herein should be interpreted as having a meaning that is consistent with their meaning in the context of this specification and the relevant art and will not be interpreted in an idealized or overly formal sense unless expressly so defined herein.

The foregoing has described the principles, preferred embodiments and modes of operation of the present invention. However, the invention should be regarded as illustrative rather than restrictive, and not as being limited to the particular embodiments discussed above. The different features of the various embodiments of the invention can be combined in other combinations than those explicitly described. It should therefore be appreciated that variations may be made in those embodiments by those skilled in the art without departing from the scope of the present invention as defined by the following claims.

**Claims**

1. A method for alignment of sensor units comprised in at least two independent communication devices operating in the same environment, said method comprising the steps of:

    receiving a first signal representing sensor data collected by a first sensor unit comprised in a first communication device;
    receiving a second signal representing sensor data collected by a second sensor unit comprised in a second communication device, **characterized by** calculating a correlation function between said first signal and said second signal;

defining the time difference between first and second signals by finding a maximum in said correlation function while time shifting the first and the second signals; and

calibrating the first and second sensor units to compensate for said defined time difference.

2. The method according to claim 1, wherein the method further comprises the steps of:

finding a first movement, based on the correlation function, and defining a first reference axis in the reference co-ordinate system in each device as the direction of the first found movement ;

finding a second movement, based on the correlation, which are different from the first found movement, for defining a second reference axis in the reference co-ordinate system in each device as the direction of the second found movement; and

determining the relative rotation between the at least two devices by combining the defined first and second reference axis within the reference co-ordinate system of each devices.

3. The method according to claim 2, wherein the method further comprises the steps of:

repeatedly finding movements correlated between the at least two sensor units,

repeatedly combining the found movement with the previously found movement between the at least two sensor units for increasing accuracy in the defined time delay and in the determined relative orientation.

4. The method according to claim 2, wherein the second reference axis is determined as a projection of the second movement perpendicular to the first reference axis.

5. The method according to any of claim 1 to 4, wherein the movement is a linear acceleration or a rotational acceleration.

6. The method according to claim 5, wherein the direction of the first reference axis is along the linear acceleration, opposite the linear acceleration, along a clockwise rotation axis of the rotational acceleration or along a counterclockwise rotation axis of the rotational acceleration.

7. The method according to claim 6, wherein the second reference axis is the reference rotation in a plane perpendicular towards the first reference axis.

8. The method according to claim 1, wherein the step of defining a time delay further comprising:

determining a first reception time of the first signal;

determining a second reception time of the second signal;

and

defining the time delay as the difference between the first and the second reception time.

9. The method according to claim 1, wherein the sensor units is any of accelerometer, gyro, magnetometer or environmental sensor.

10. A system for alignment of sensor units comprised in at least two independent communication devices operating in the same environment, said system comprises:

a unit for receiving a first signal representing sensor data collected by a first sensor unit comprised in a first communication device and receiving a second signal representing sensor data collected by a second sensor unit comprised in a second communication device, **characterized in that** said system further comprises:

means for calculating a correlation function between said first signal and said second signal;

means for defining the time difference between first and second signals by finding a maximum in said correlation function while time shifting the first and the second signals; and

means for calibrating the first and second sensor units to compensate for said defined time difference.

11. The system according to claim 10, wherein the system further comprises:

means for finding a first movement, based on the correlation function, and defining a first reference axis in the reference co-ordinate system in each device as the direction of the first found movement;

means for finding a second movement, based on the correlation, which are different from the first found movement, for defining a second reference axis in the reference co-ordinate system in each device as the direction of the second found movement; and

means for determining the relative rotation between the at least two devices by combining the defined first and second reference axis within the reference co-ordinate system of each devices.

12. The system according to claim 10, wherein said unit for receiving and processing sensor data is comprised in one of the at least two independent communication units.

13. The system according to claim 10, wherein the sensor units is any of accelerometer, gyro or magnetometer.

14. The system according to any of claims 10-13, wherein one of the at least two independent communication units is a mobile phone.

Fig. 1

Fig 2

Fig. 3

Fig. 4

**EUROPEAN SEARCH REPORT**

Application Number

EP 12 18 1496

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 047 192 A (MALONEY JOHN E [US] ET AL) 4 April 2000 (2000-04-04) * column 9, line 29 - line 40; figure 6 * * column 10, line 35 - line 40 * * column 1, line 22 - line 27 * ----- | 1,10,14 | INV. G01C21/20 G01C25/00 |
| X | US 2008/102859 A1 (KARR LAWRENCE J [US] ET AL) 1 May 2008 (2008-05-01) * paragraphs [0030], [0074], [0093] * ----- | 1,10,14 | |
| X | WO 2006/065679 A2 (NIKE INC [US]; NIKE INTERNATIONAL LTD [US]; CASE CHARLES WHIPPLE JR [U) 22 June 2006 (2006-06-22) * figure 1 * ----- | 1,10 | |
| X | US 6 122 538 A (SLIWA JR JOHN WILLIAM [US] ET AL) 19 September 2000 (2000-09-19) * column 10, line 60 - column 11, line 6; figures 4B, 5B, 6B, 12B * ----- | 1,9,10, 13 | |
| X | US 2009/326851 A1 (TANENHAUS MARTIN E [US]) 31 December 2009 (2009-12-31) * paragraph [0121]; figures 3,8 * ----- | 1,9,10, 13 | TECHNICAL FIELDS SEARCHED (IPC) |
| A | US 2010/057571 A1 (YAMAMOTO KAZUYUKI [JP] ET AL) 4 March 2010 (2010-03-04) * figures 1,2,3 * ----- | 1,10 | G01S G08B A63B G01C A61B G06Q |

The present search report has been drawn up for all claims

| Place of search | Date of completion of the search | Examiner |
|---|---|---|
| The Hague | 18 January 2013 | de la Rosa Rivera, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 2 700 905 A1

**ANNEX TO THE EUROPEAN SEARCH REPORT
ON EUROPEAN PATENT APPLICATION NO.** EP 12 18 1496

This annex lists the patent family members relating to the patent documents cited in the above-mentioned European search report.
The members are as contained in the European Patent Office EDP file on
The European Patent Office is in no way liable for these particulars which are merely given for the purpose of information.

18-01-2013

| Patent document cited in search report | | Publication date | Patent family member(s) | | Publication date |
|---|---|---|---|---|---|
| US 6047192 | A | 04-04-2000 | AT | 270809 T | 15-07-2004 |
| | | | AU | 757840 B2 | 06-03-2003 |
| | | | BR | 9814250 A | 03-10-2000 |
| | | | CA | 2317414 A1 | 23-07-1998 |
| | | | CN | 1286008 A | 28-02-2001 |
| | | | DE | 69824973 D1 | 12-08-2004 |
| | | | DE | 69824973 T2 | 30-06-2005 |
| | | | EP | 1048179 A2 | 02-11-2000 |
| | | | ES | 2227815 T3 | 01-04-2005 |
| | | | JP | 4212017 B2 | 21-01-2009 |
| | | | JP | 2003529228 A | 30-09-2003 |
| | | | MX | PA00006951 A | 08-05-2002 |
| | | | NZ | 505953 A | 30-06-2003 |
| | | | TW | 449661 B | 11-08-2001 |
| | | | US | 6047192 A | 04-04-2000 |
| | | | US | 6546256 B1 | 08-04-2003 |
| | | | US | 2003129996 A1 | 10-07-2003 |
| | | | US | 2008161015 A1 | 03-07-2008 |
| | | | WO | 9832297 A2 | 23-07-1998 |
| | | | ZA | 9800330 A | 14-09-1998 |
| US 2008102859 | A1 | 01-05-2008 | US | 2008102859 A1 | 01-05-2008 |
| | | | US | 2011207475 A1 | 25-08-2011 |
| WO 2006065679 | A2 | 22-06-2006 | BR | PI0519077 A2 | 23-12-2008 |
| | | | CA | 2593507 A1 | 22-06-2006 |
| | | | CA | 2717401 A1 | 22-06-2006 |
| | | | CN | 101111743 A | 23-01-2008 |
| | | | CN | 101711915 A | 26-05-2010 |
| | | | CN | 102198316 A | 28-09-2011 |
| | | | CN | 102198317 A | 28-09-2011 |
| | | | CN | 102198318 A | 28-09-2011 |
| | | | CN | 102198319 A | 28-09-2011 |
| | | | CN | 102205176 A | 05-10-2011 |
| | | | CN | 102225230 A | 26-10-2011 |
| | | | CN | 102225231 A | 26-10-2011 |
| | | | CN | 102225232 A | 26-10-2011 |
| | | | CN | 102225233 A | 26-10-2011 |
| | | | CN | 102225234 A | 26-10-2011 |
| | | | CN | 102225235 A | 26-10-2011 |
| | | | EP | 1825220 A2 | 29-08-2007 |
| | | | EP | 2333489 A1 | 15-06-2011 |
| | | | EP | 2333490 A1 | 15-06-2011 |
| | | | EP | 2333491 A1 | 15-06-2011 |
| | | | EP | 2336726 A1 | 22-06-2011 |
| | | | EP | 2336727 A1 | 22-06-2011 |

For more details about this annex : see Official Journal of the European Patent Office, No. 12/82

14

**EP 2 700 905 A1**

## ANNEX TO THE EUROPEAN SEARCH REPORT
## ON EUROPEAN PATENT APPLICATION NO.

EP 12 18 1496

This annex lists the patent family members relating to the patent documents cited in the above-mentioned European search report.
The members are as contained in the European Patent Office EDP file on
The European Patent Office is in no way liable for these particulars which are merely given for the purpose of information.

18-01-2013

| Patent document cited in search report | | Publication date | Patent family member(s) | | Publication date |
|---|---|---|---|---|---|
| | | | EP 2336728 A1 | | 22-06-2011 |
| | | | EP 2357446 A2 | | 17-08-2011 |
| | | | EP 2357447 A2 | | 17-08-2011 |
| | | | EP 2357448 A2 | | 17-08-2011 |
| | | | EP 2357449 A2 | | 17-08-2011 |
| | | | EP 2357450 A2 | | 17-08-2011 |
| | | | JP 2008524589 A | | 10-07-2008 |
| | | | JP 2010075715 A | | 08-04-2010 |
| | | | JP 2010253302 A | | 11-11-2010 |
| | | | JP 2010253303 A | | 11-11-2010 |
| | | | US 2006136173 A1 | | 22-06-2006 |
| | | | US 2007287596 A1 | | 13-12-2007 |
| | | | US 2009319230 A1 | | 24-12-2009 |
| | | | US 2010210421 A1 | | 19-08-2010 |
| | | | US 2012078396 A1 | | 29-03-2012 |
| | | | WO 2006065679 A2 | | 22-06-2006 |
| | | | ZA 200704967 A | | 25-09-2008 |
| US 6122538 | A | 19-09-2000 | NONE | | |
| US 2009326851 | A1 | 31-12-2009 | NONE | | |
| US 2010057571 | A1 | 04-03-2010 | CN 101298988 A | | 05-11-2008 |
| | | | JP 4315211 B2 | | 19-08-2009 |
| | | | JP 2008275519 A | | 13-11-2008 |
| | | | US 2010057571 A1 | | 04-03-2010 |

EPO FORM P0459

For more details about this annex : see Official Journal of the European Patent Office, No. 12/82

15